Europäisches Patentamt

European Patent Office

Office européen des brevets

(19)

(11) EP 1 146 486 A2

(12) **EUROPEAN PATENT APPLICATION**

(43) Date of publication:
**17.10.2001 Bulletin 2001/42**

(51) Int Cl.7: **G07C 5/00**

(21) Application number: **01303424.4**

(22) Date of filing: **11.04.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **13.04.2000 JP 2000111529**

(71) Applicants:
• **Daito Mechatronics Co. Ltd.**
 **Nagoya-shi, Aichi-ken (JP)**
• **SP Kikaku Co., Ltd.**
 **Nagoya-shi, Aichi-ken (JP)**

(72) Inventors:
• **Nojiri, Takashi**
 **Aichi-ken (JP)**
• **Ito, Yoshiyuki**
 **Nagoya-shi, Aichi-ken (JP)**

(74) Representative: **Bannerman, David Gardner et al**
 **Withers & Rogers,**
 **Goldings House,**
 **2 Hays Lane**
 **London SE1 2HW (GB)**

(54) **System for analyzing operating condition of vehicle**

(57)  This operating condition analyzing system is adapted to read operational data recorded on a disc type chart paper by an analog tachograph and including a travel speed, a travel distance, etc., and analyze the operating condition of a vehicle. Operational data recording lines showing travel speed, travel distance, etc. recorded on the chart paper are read with time axes, travel distance graduation lines and travel speed graduation lines, which are printed in polar coordinate form on the chart paper, by an image scanner. The position of the center of the chart paper is computed, and at least operational data recording lines are converted from a polar coordinate form to a rectangular coordinate form, the resultant data being shown on a display or printed out. A minimum speed, a maximum speed and a travel distance for each unit time period are computed on the basis of the recording lines for operational data which were read including the travel speed and travel distance, and the computed data are stored in a data base. On the basis of the data stored in the data base, numerical values of a minimum speed, a maximum speed and a travel distance for each unit time are outputted to prepare a daily operation report and an operational condition table.

Fig. 1

**Description**

Background of the Invention:

1. Field of the Invention:

This invention relates to an operating condition analyzing system adapted to read the operating condition of a vehicle from operational data recording lines recorded on chart paper by an analog tachograph mounted on a vehicle, and analyze the operating condition thus read.

2. Description of the Related Art:

An analog tachograph adapted to record operational data on a vehicle and mounted on a vehicle has heretofore been used. This kind of analog tachograph is adapted to record operational data as recording lines on disc type chart paper. Therefore, an analysis of operational data and a judgement of operating condition of a vehicle are made by a controller as the operational data recording lines on the chart paper are visually observed by him. Since the operational data recording lines are bent into arcs on disc type chart paper, it is very difficult to see the recording lines clearly and analyze the traveling condition of a vehicle.

In Japan, a digital tachograph was sanctioned by the Ministry of Transport in January 1999. The digital tachograph is adapted to read data on travel speed and a travel distance, etc., which are measured during the traveling of a vehicle in a recording medium, such as a memory card and the like, the recording medium being taken out after the traveling of the vehicle finishes, and connected to a computer for making an analysis of the traveling data.

However, when a recording medium, such as a memory card and the like set in a digital tachometer is mounted on a vehicle and used in practice repeatedly, wear and dirt occur on the terminal, etc. Such a recording medium is used in a severe environment in some cases during the traveling of a vehicle. Therefore, the recording medium goes out of order frequently, and lacks reliability.

Under the present condition in which analog tachographs are already mounted on the vehicles of most delivery companies and used in practice, it is a heavy burden for the owners of the vehicles to change all at once the analog tachographs to digital tachographs, though the digital tachographs were sanctioned by the Ministry of Transport. In view of this, it is estimated that, among the vehicles of delivery companies, many analog tachographs will continue to be used for the time being with some digital tachographs provided in some vehicles.

As mentioned above, the analog tachographs account for a greater percentage of the tachographs now used in the delivery business but the operation data recorded thereon cannot be digitized. Consequently, it is impossible to store the collected operation data in a data base easily and analyze such operation data. Under the circumstances , the operation data collected with much effort cannot be utilized for honoring good drivers, and guiding and instructing bad drivers.

Summary of the Invention:

The present invention has been made in view of the above circumstances, and provides an operating condition analyzing system capable of displaying or printing operation data recording lines recorded on chart paper by an analog tachograph, in such a manner that the recording lines can be seen easily; and having a controller analyze the operation data recording lines easily.

According to an aspect of the present invention, the operating condition analyzing system has an image scanner read disc type chart paper on which operation data are recorded by an analog tachograph; a computer adapted to read therein images of the operation data, such as stopping and travel speeds, a travel distance, etc. recorded on the chart paper along with the time axes, travel distance graduation lines, travel speed graduation lines, etc. which are also printed in polar coordinate form on the chart paper; a storage unit adapted to store these image data; and a device adapted to convert the images of the operation data recording lines and graduation lines which are recorded in polar coordinate form, into those in rectangular coordinate form by a computation process using geometric computation, the operation data recording lines and graduation lines in rectangular form being shown on a display of the computer or printed.

In order to accurately convert the images of time axes, graduation lines and operation data recording lines recorded on chart paper into those in rectangular coordinate form, it is necessary to accurately determine a position of the center of the chart paper.

To meet the requirement, a mounting paper for supporting chart paper is provided. The mounting paper is printed with a chart paper setting circle indicating the chart paper setting position and which is slightly larger than the outer circle of the chart paper, and a black color portion positioned in the center of the chart paper setting circle and slightly larger than the central hole of the chart paper. The chart paper is held in the chart paper setting circle of the mounting paper, and this mount-supported chart paper is placed in a predetermined position on the reading table of an image scanner.

The image data are read into a computer by the image scanner, and the black circular portion of the central hole of the chart paper is detected as an aggregation of black dots, a central position of the chart paper with respect to the black dotted portion being computed using the Pythagorean theorem, etc. The time axes drawn radially from the center of the chart paper are converted so as to display the time axes as regularly spaced lines parallel to the Y-axis, while travel distance graduation lines and travel speed graduation lines, which are drawn by concentric circles around the center position, are converted so as to display these graduation lines as regularly spaced lines parallel to the X-axis. Similarly, operation data recording lines are also converted from a polar coordinate form into a rectangular coordinate form, and operation data recording lines in rectangular form are displayed on the time axes and graduation lines in the X- and Y-axis rectangular coordinate space.

It is recommended that the mount mentioned above be printed with an time mark line which extends from the center of the circle printed on the mounting paper to show the attaching position toward an edge of the mounting paper, and which is slightly longer than the radius of the chart paper attaching circle. In this case, the chart paper can be retained within the chart paper setting circle by aligning a specific time axis printed on the chart paper with the time mark line on the mount. This enables the operation starting time to be positioned at a left end of a picture plane in rectangular coordinate form having the X-axis as the time axis, and the operation data recording lines to be displayed toward the right (direction of the X-axis) with the lapse of time.

Accordingly, it becomes possible for the vehicle operation controller to recognize a maximum speed and a travel distance of the vehicle in operation and analyze the operating condition comparatively easily by observing the operation data recording lines and graduation lines drawn in rectangular coordinate form.

The present invention also provides an operating condition analyzing system capable of analyzing operational data easily by reading the operational data on chart paper which are recorded by an analog tachograph, digitizing the data, storing the resultant data in a data base.

According to another aspect of the present invention, the operating condition analyzing system has in addition to the above-mentioned structure chart paper on which hour axes and graduation lines are printed in red, operation data recording lines being recorded in black-based color thereon. A red filter is placed on a reading table of an image scanner, and a mount holding the chart paper thereon is set on the filter, the image scanner being operated to take image data on the chart paper into a computer.

In consequence, the hour lines, travel distance and travel speed graduation lines, letters, etc. printed in red-based color on the chart paper are erased from read image data, and only a black circular portion indicating a central position on the chart paper, hour mark lines and operation data recording lines are taken and stored as image data into and in the computer.

The central position of the chart paper is computed as mentioned above, and travel starting and finishing time are inputted. The operational data recording lines recorded in polar coordinate form are converted into recording lines in rectangular coordinate form. At every predetermined time (for example, about 15 seconds) in the direction of a time axis (X-axis), an X-value (increasing by one dot each time) and operation data recording lines including a travel speed and a travel distance detected in the form of black dots which turn into a Y-value at the mentioned time are counted as minimum and maximum values of the number of dots continuing from the center, and the numerical values thereof are stored as a minimum speed, a maximum speed and travel distance data within the time in a data base.

The time axes spaced at intervals representing those of a predetermined period of time (for example, 30 seconds), travel distance recording lines spaced at intervals representing those of 10 Km, travel speed graduation lines spaced at intervals representing those of 10 Km/h are displayed or printed on a picture plane of a rectangular coordinate graph, in which the time and speed are shown in the directions of the X- and Y-axes, by using data of numerical values of number of dots indicating these operation data recording lines.

A maximum speed, an average speed, a travel ratio in each travel zone, and a travel speed, travel time, stopping time, etc., which are not lower or shorter than reference levels, in the whole travel are computed on the basis of the numerical value data on these operation data recording lines, and the results are displayed or printed as a daily operation report and an operating condition evaluation table on which an operator, vehicle and a date of operation are designated. Thus, an analysis of operational data can be made easily and accurately by reading the operational data, which are recorded by an analog tachograph and shown on chart paper, digitizing the resultant operational data, and storing these operation data in a data base.

Brief Description of the Drawings:

Fig. 1 is a general construction diagram of a first embodiment of the operating condition analyzing system according to the present invention;
Fig. 2 is a general construction diagram of another embodiment;
Fig. 3 is a plan view of a mounting paper for retaining chart paper thereon;
Fig. 4 is a plan view showing a mounting paper on which chart paper is placed;
Fig. 5 is a plan view of a mounting paper to which a plastic sheet is bonded;
Fig. 6 is a plan view of chart paper on which operational data are recorded;
Fig. 7 is an image diagram on which operational data recording lines are converted with hour axes and graduation lines into those in rectangular coordinate form and then indicated on a display;
Fig. 8 is a partial enlarged view of what are shown in the Fig. 7 image diagram;
Fig. 9 shows a second embodiment with an image scanner illustrated in perspective on which a red filter and a mount are placed;
Fig. 10 illustrates a display box into which travel starting time and travel finishing time are inputted;
Fig. 11A is a rectangular coordinate graph on which travel distance converted into data in rectangular coordinate form are shown;
Fig. 11B is a graph showing travel distances converted to numerical values along a time axis;
Fig. 12 illustrates a display box of a menu for a computer processing operations;
Fig. 13 is an output graph showing travel speeds and travel distances obtained after an analysis of operational data;
Fig. 14 illustrates chart paper with graduation lines, etc. printed in red-based color thereon, which shows a picture reading image display of an image that has been taken using a red filter;
Fig. 15 is a flow chart showing actions of the operating condition analyzing system;
Fig. 16 shows an output table in a daily operation report which is prepared on the basis of the data stored in a data base; and
Fig. 17 shows an operating condition evaluation table prepared on the basis of the data stored in a data base.

Description of the Preferred Embodiments:

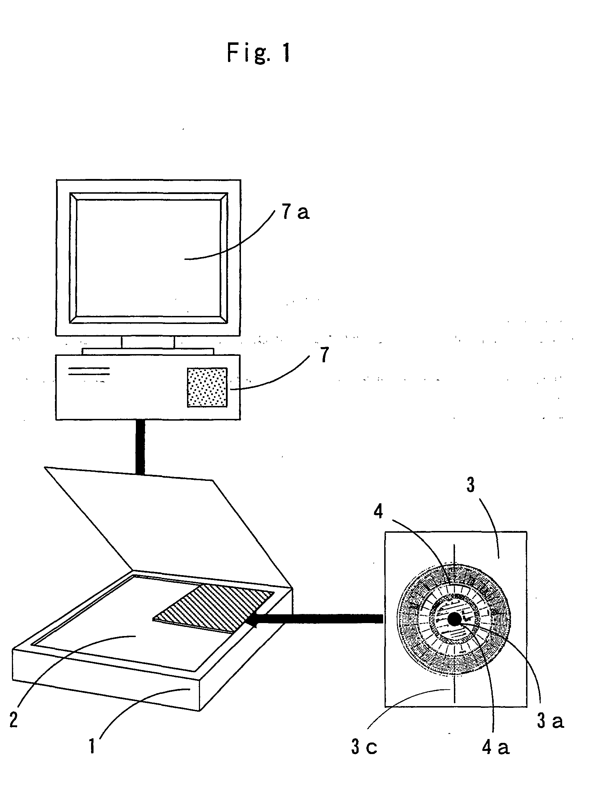

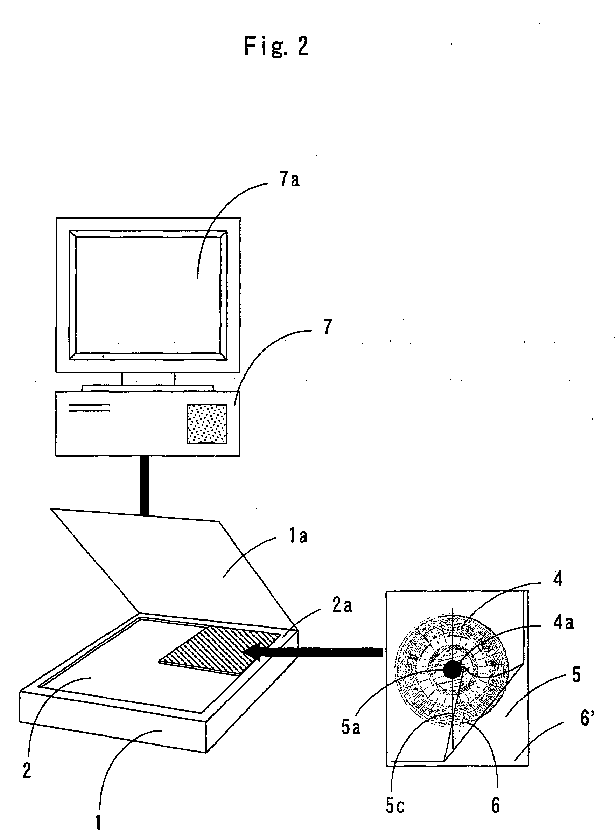

Preferred modes of embodiments of the present invention will now be described with reference to the drawings. Referring to Figs. 1 and 2, a color image scanner 1 is connected to a computer 7, and chart paper 4 is set with a mount 5 on a reading table 2 of the scanner with a cover thereof opened. A multipurpose color scanner can be used as the image scanner 1.

In Fig. 1, a chart paper pasting mounting paper 3 of a quadrilateral shape on which the chart paper 4 is fixed is placed directly on the reading table 2 by fitting two adjacent sides of the mounting paper in a corner portion 2a of the reading table 2 of the scanner. In Fig. 2, chart paper 4 is inserted between a transparent plastic sheet 6 and a chart paper fixing mounting paper 5 of a quadrilateral contour bonded securely to the inner side 6' of the plastic sheet, and the resultant product is placed on a scanner so that an operational data recording surface of the chart paper 4 contacts the reading surface of a reading table 2.

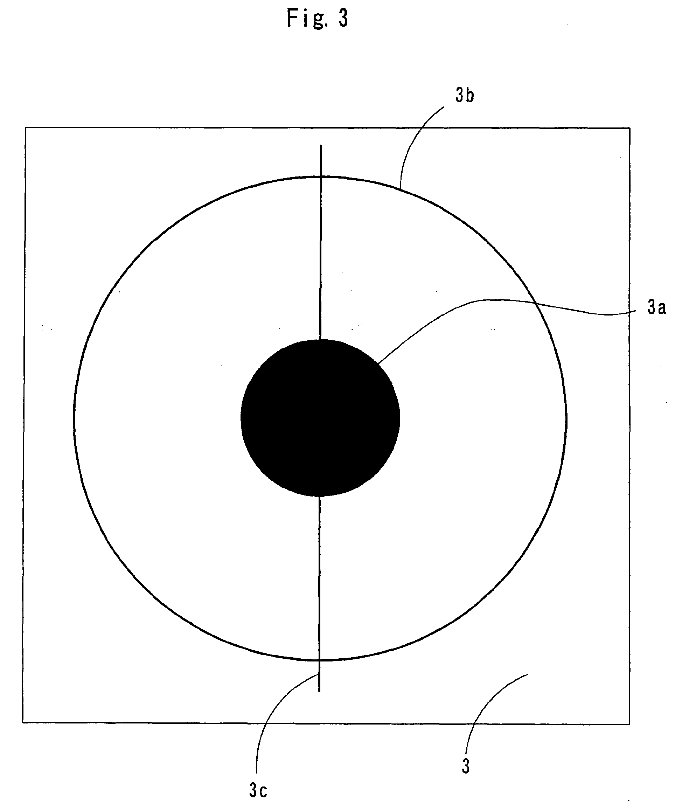

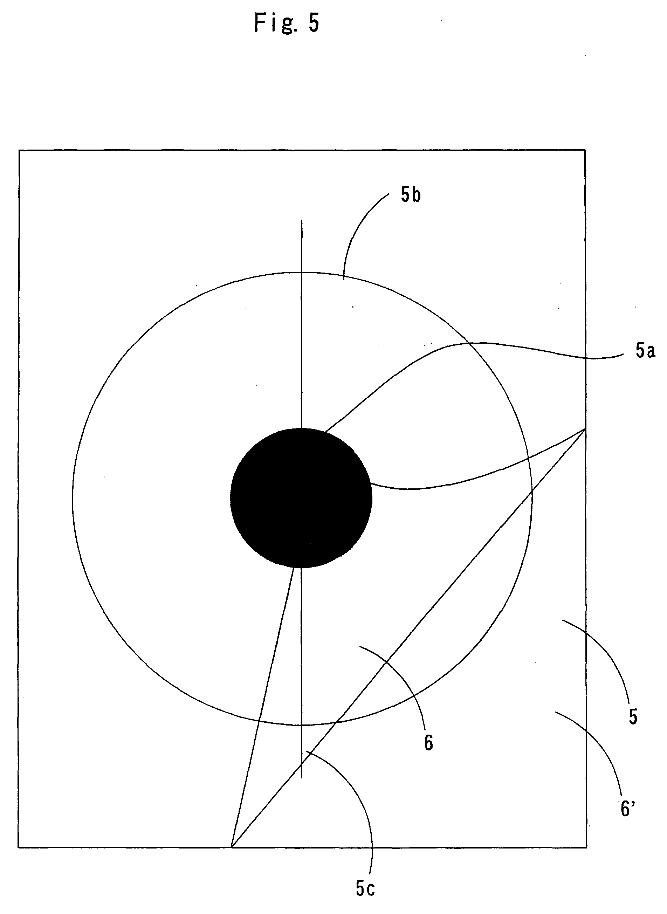

As shown in Fig. 3 or 5, a chart paper pasting mounting paper 3 or a chart paper fixing mounting paper 5 is made of A5-A4 sized paper. A chart paper setting circle 3b or 5b of a diameter slightly larger than that of 123 mm of the chart paper 4 and a time mark line 3c or 5c are printed on the central portion of the mount. A black circle slightly larger than a central hole 4a of the chart paper 4 or a polygonal black portion 3a or 5a which is slightly larger than a central hole 4a of the chart paper 4 is also printed on the portion of the mounting paper on which is placed the central hole 4a at the chart paper setting time.

The computer 7 is formed of a multipurpose personal computer, which has a display 7a, and which is adapted to carry out the operations, which will now be described, i.e. the taking-in of image data from the image scanner, the converting of the image data in polar coordinate form into image data in rectangular coordinate form, the computing of a minimum speed, a maximum speed, a travel distance, etc. for every predetermined time period on the basis of the lines of recorded operational data, i.e. the image data, and the storing of the computed data in a data base, in accordance with an application program stored in advance. On the basis of the data stored in the data base, such as minimum speed, maximum speed, travel distance, etc. for every predetermined time period, a table in a daily operation report in which the driver of the vehicle and the operation date are designated is prepared, and the table is outputted to and shown on the display. The data is outputted to a printer (not shown) to print the table.

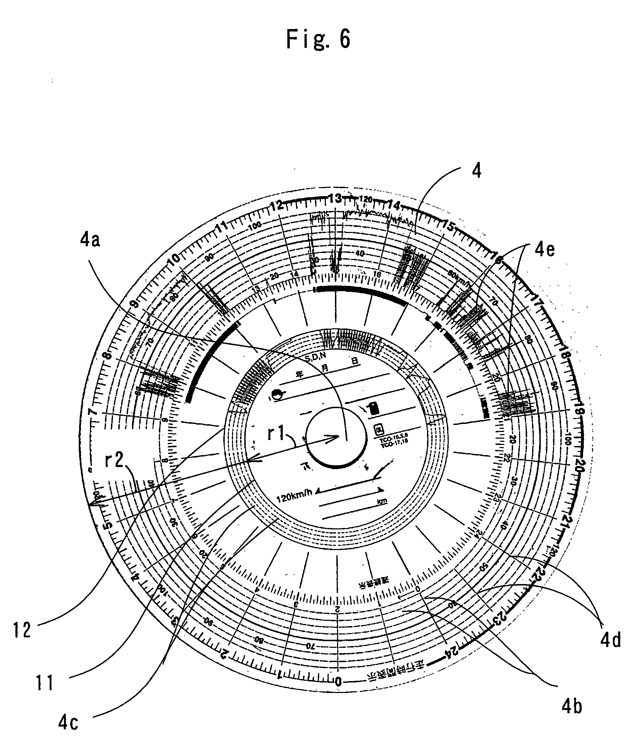

Fig. 6 is a plan view of 26-hour 120 km/h type chart paper 4 on which operational data for one day are to be recorded. Besides this chart paper, there are 24-hour type chart paper, 140 km/h type chart paper, chart paper on which an engine rotation speed can be recorded, chart paper on which data for 3 or 7 days are to be recorded, small type chart paper for taxis and other types of chart paper. The conditions in accordance with the respective types of chart paper can be inputted and set in the computer 7.

One surface (recording side) of the chart paper 4 is printed with plural travel speed graduation lines 4b, travel distance graduation lines 4c, time axes 4d, etc. as shown in Fig. 6. The operational data speed recording lines 4e and operation data distance recording lines 4g recorded on the outer surface of the chart paper 4 by an analog tachograph are drawn in gray close to black.

The operation of the operating condition analyzing system of the above-mentioned construction will now be described. First, chart paper on which data are recorded by an analog tachograph during a travel of a vehicle is subjected to an operation of the image scanner 1, and an image formed is taken into the computer 7. The reading of an image by the image scanner 1 is done by setting reading conditions including scanning area, type (full color) of image, resolution (400 DPI), etc. in the computer 7.

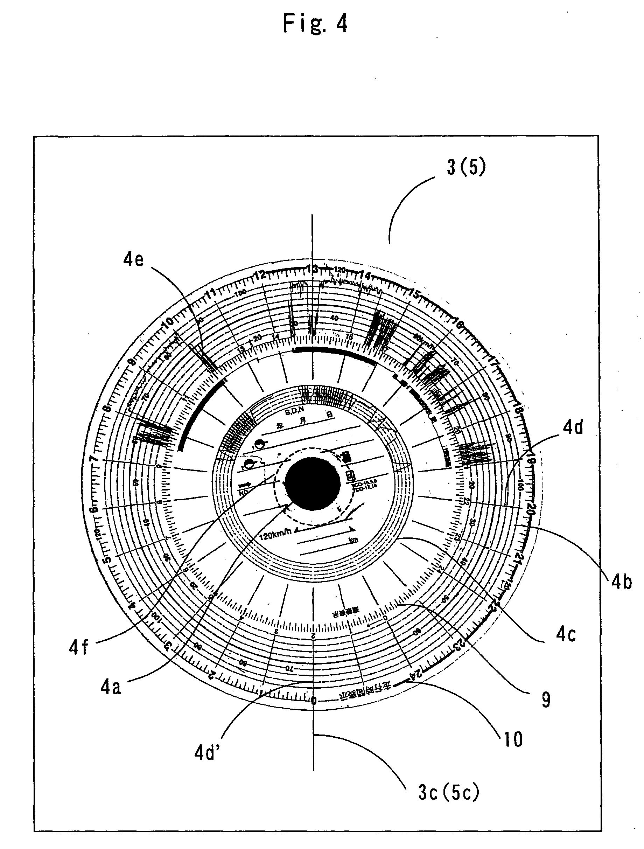

The chart paper 4 is set on the reading table 2 of the image scanner 1 as shown in Fig. 4 by first placing the chart paper 4, on which operational data speed recording lines 4e and operation data distance recording lines 4g are recorded, on the chart paper setting circle 3b or 5b printed on the chart paper pasting mounting paper 3 or chart paper fixing mounting paper 5 with a mark.line 3c or 5c for travel starting time and a time axis 4d' of 0 o'clock aligned with each other.

When the chart paper pasting mounting paper 3 of Fig. 3 is used during this chart paper setting operation, the chart paper 4 is pasted on the mount 3 with the operational data recording surface of the chart paper directed upward, by using a double adhesive tape or paste. When the chart paper fixing mounting paper 5 of Fig. 5 is used, the chart paper 4 is placed with its operational data recording surface directed upward on the mounting paper 5 bonded securely to an inner portion of one surface of a two-folded transparent plastic sheet 6, and the plastic sheet 6 is closed over the operation data recording surface, the chart paper 4 being thereby held inside.

The chart paper pasting mounting paper 3 on which the chart paper 4 is supported, or the plastic sheet 6 to which the chart paper fixing mounting paper 5 is securely bonded is placed in a predetermined position on the reading table 2 of the image scanner 1 with the mounting paper fitted in a corner portion 2a of an inner frame 2a of the reading table 2 of the scanner 1. Thus, the chart paper is set so that the surface thereof on which operational data recording lines of the chart paper are recorded contacts the reading table 2 of the scanner, i.e., faces in the downward direction in Figs. 1 and 2, and the cover of the image scanner 1 is then closed.

The image scanner 1 or the computer 7 is operated to start a scanning operation, and the operational data recording lines 4e recorded on the chart paper 4 are taken as image data along with the travel speed graduation lines 4b, travel distance graduation lines 4c and time axes 4d into the computer 7.

During this time, the central hole 4a of the chart paper is read in black owing to a black portion 3a or 5a printed on the chart paper pasting mounting paper 3 or chart paper fixing mounting paper 5 in the form of a circle and slightly larger than the central hole of the chart paper 4. This black portion at the central hole 4a is used for detecting the center of the chart paper 4. Concerning the conditions for reading image data by the image scanner 1 and computer 7, for example, the resolution is set to 400 DPI, and image data of 400 dots per inch (25.4 mm) are taken into the computer 7. The computer 7 shows the image on the chart paper 4, which is read from the image scanner 1 as mentioned above, on the display 7a. The image on the chart paper 4 is displayed in color in the condition shown in Fig. 6. The travel speed graduation lines 4b, travel distance graduation lines 4c and time axes 4d are displayed, for example, in green, and the operational data recording lines 4c in gray close to black.

The operator then designates and inputs a range of read analysis of operation data, i.e. the operation starting and finishing positions as he observes the image on the chart paper on the display 7a. To be exact, the designating of these positions is done by putting the mouse operated pointer of the computer 7 on the operation starting and finishing positions on the chart paper 4, which are shown on the image, and clicking the mouse. As a result, the range of the image in polar coordinate form to be converted into rectangular coordinate form is shown in the shape of a fan on a display 7a. Since the fan-shaped range is converted clockwise, the operation starting and finishing positions are always at the left end and right end respectively in an image in rectangular coordinate form displayed after the range conversion operation is carried out.

The operator then inputs a conversion instruction into the computer 7, and carries out in practice a process for converting the image data in polar coordinate form on the chart paper into those in rectangular coordinate form. In order to convert the image data in polar coordinate form on the chart paper into those in rectangular coordinate form, it is necessary to read the distance (number of dots) between the central position of the chart paper and the operational data recording lines at every unit time. Therefore, the central position of the chart paper is computed on the basis of an image of the chart paper in the following manner.

Since the chart paper 4 is necessarily set on a chart paper pasting mounting paper 3 or a chart paper fixing mounting paper 5 of a predetermined size, for example, one of A5~A4 sizes, a round hole in a black central portion of the taken-in image data is found in substantially the same position every time. Accordingly, the computer 7 identifies the black central circle taking into consideration the slight possible deviation due to the fact that the dots of the provisional black circle 4f of the mounting paper are 20 mm in diameter, which is slightly larger than the 15 mm diameter of the round hole 4a.

Let (Xa, Ya) equal temporary central coordinates of the chart paper 4 in image data. Since the radius of the provisional circle 4f is 20÷25.4x400÷2=157 dots, the Y-coordinates of this circle are all between (Ya-157) and (Ya+157), and the round hole 4a of an actual center exists in this provisional circle 4f.

The computer 7 then makes a color judgement from a position of (Y-157) dot, the minimum value of the Y-coordinate on the basis of a preset black color judgement reference value.

Concerning the range of the X-coordinates, the square root of {$157^2$-(Y-coordinate - Ya)$^2$} (here called A) is computed with respect to every Y-coordinate in accordance with the Pythagorean theorem, and a black color identification is done the range between (Xa-A) and (Xa+A).

When the preset black color judgement reference value is detected concerning a dot in the range thus computed, the number thereof is counted, and the coordinates XY are added respectively. When the total count for each of the XY coordinates are finally divided by the total number of black dots, the center of gravity of the round hole is determined, which constitutes the center of the chart paper.

When the round hole in the central portion is not perfectly circular (notched circle) , the computer 7 makes a color judgement from the center of the above-mentioned provisional circle, and the coordinates of the boundary of the round hole, which are judged on the basis of the black color judgement reference value, are determined. Since the coordinates of the boundary thus determined exist in positions equidistant from the center of the round hole, the central coordinates and radius of the round hole are computed on the basis of the coordinates of the boundary by using a least square, and the like.

On chart paper out of the above-mentioned chart paper 4 which is divided into 24 equal parts in the circumferential direction, 360÷24=15° represents 1 hour, while, on chart paper having a notched portion and the like and divided into 26 equal parts, 360÷26=13.846° represents 1 hour. Therefore, the time indicated by operational data can be analyzed on the basis of angles formed by lines connecting the center of the chart paper and each point on the operational data recording lines together and a line giving the travel starting time. A travel speed and a travel distance can also be computed from the distance between the center and each point mentioned above.

The chart paper 4 on which operational data are recorded by an analog tachograph includes chart paper for one-day use, chart paper for three-day use and chart paper for seven-day use. The chart paper for one-day use is divided into 24 or 26 equal parts with respect to a 360° circular figure, and the chart paper for 3- and 7-day use into 26 equal parts. When chart paper divided into 26 equal parts and having a record of rotation of an engine with a maximum speed of 120 km/h is read at a resolution of 400 DPI, the outer diameter of the chart paper is 123 mm ÷ 25.4x400 = 1937 dots, and the resolving power 360°÷(πx1937)=0.059159°, which is converted into 15.381354 seconds.

Image elements of an original image are read one by one each time the angle is shifted by the resolving power (0.059159°), from r1=18.5 mm ÷ 25 . 4 x 400 = 291 dots from the center (inner diameter of travel distance graduation lines 4c on the chart paper) to r2=61.5 mm ÷ 25.4x400 = 968 dots from the center (outer diameter of the chart paper). Writing in the rectangular coordinate space is carried out in the Y-direction, of the image elements from 0 dot to 968-291=677 dot of the converted image, the writing operation shifting one dot at a time in the X-direction, and a doughnut-shaped circular figure, i.e. an operational graph in polar coordinate form is thereby converted into an operational graph in rectangular coordinate form extending from a left end of the picture plane representing the travel starting time toward a right end thereof representing the travel finishing time.

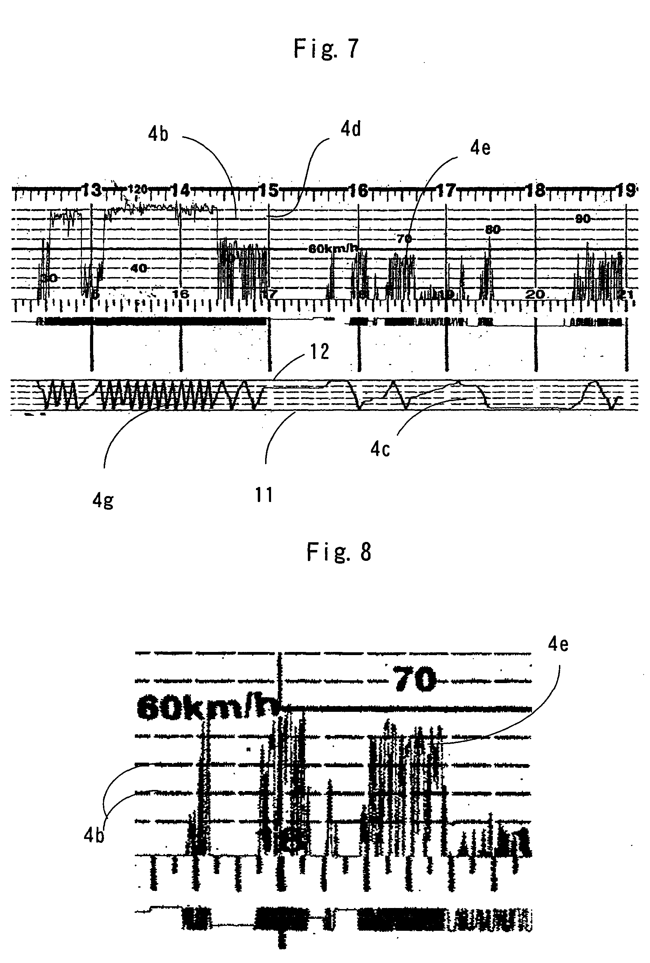

The conversion of an operation graph in polar coordinate form into that in rectangular coordinate form finishes in described above. On the display 7a, such an operation graph in easy-to-read rectangular coordinate form is shown as in Fig. 7. A portion of the operation graph in rectangular coordinate form on the display which is designated by the pointer can be shown in an enlarged scale.

For example, a range of time between 15:20 and 17:00 displayed on the picture plane is designated by a pointer, which is clicked by using a mouse to indicate the range to be enlarged, and a magnification is selected from an edition menu to carry out an enlarge-displaying operation. A part of the operational graph can then be shown in an enlarged scale on the display 7a as shown in Fig. 8, so that speed data and the like for any time period can be recognized visually with ease. This version of an operational graph, which can be seen easily in rectangular coordinate form, can also be printed by a printer.

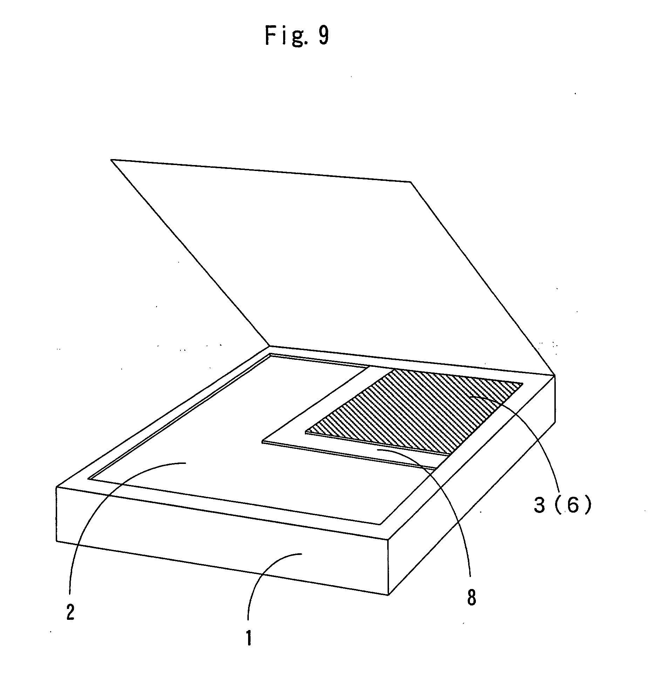

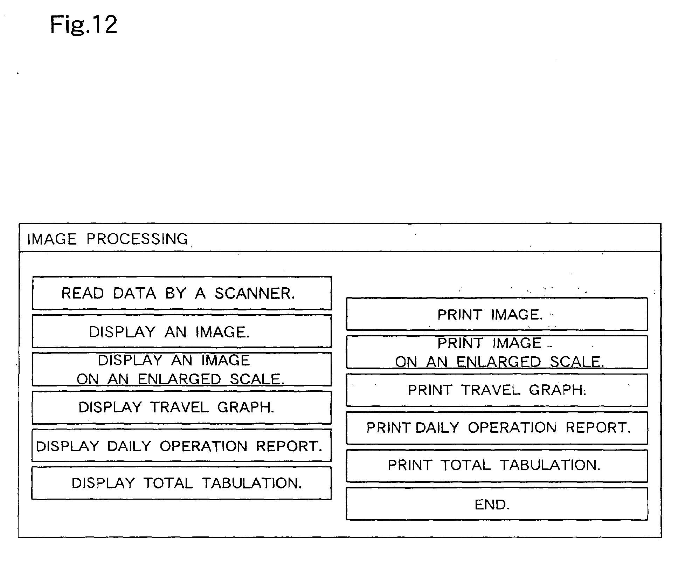

A second embodiment of the operating condition analyzing system will now be described with reference to Figs. 9-17.

When a color image scanner is used, travel graduation lines 4b on chart paper 4 can be read even when these lines are printed in an arbitrary color, such as green and the like. When travel speed graduation lines 4b, travel distance graduation lines 4c, time axes, etc. on the chart paper 4 are printed in red-based color with an image scanner 1 having a red filter 8 thereon used, the operation data recording lines alone can be taken as image data. This enables the operation data including a minimum speed and a maximum speed, etc. for every unit time to be computed as numerical values on the basis of the operational data recording lines on the image.

Namely, as shown in Fig. 9, chart paper 4 on which time axes, graduation lines, letters, etc. are printed in red-based color with a red filter 8 placed on the image scanner 1, and on which operational data are recorded by an analog tachograph, is pasted on a chart paper pasting mounting paper 3 in the same manner as mentioned above by a method as shown in Fig. 4, or held on an inner side of a plastic sheet 6 to which chart paper fixing mounting paper 5 is bonded.

This chart paper pasting mounting paper 3 or plastic sheet 6 is then set on a reading table 2 of the scanner as shown in Fig. 9 by the same method as described above. The reading of an image on the chart paper 4 is then done by operating a computer 7 and image scanner 1. The reading of the image by the image scanner is done by setting the reading conditions including a scanning area, color type (black-and-white in this embodiment) of the image to be read, resolution (400 DPI), etc. in the computer 7.

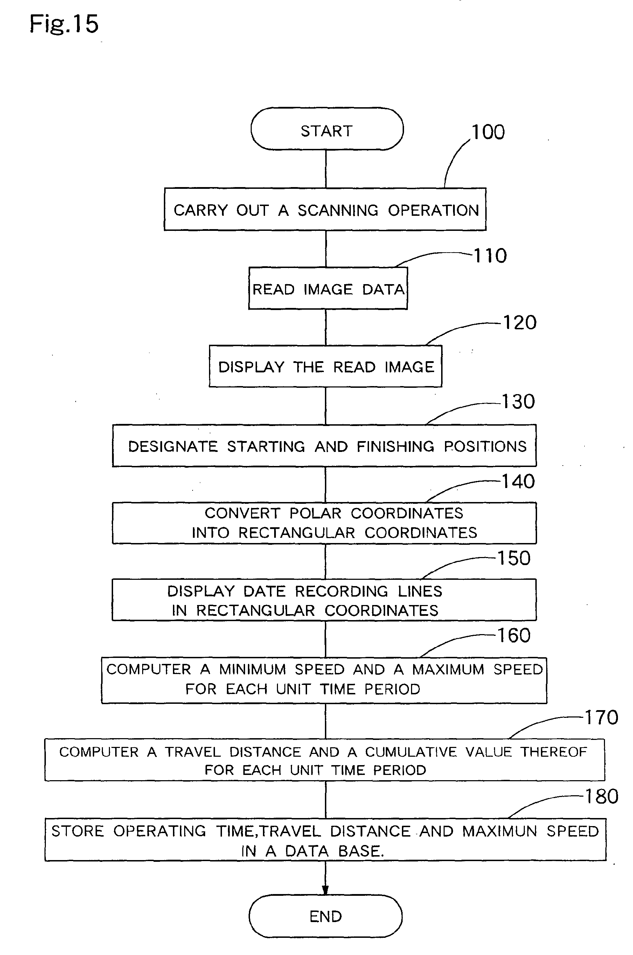

As shown in a flow chart of Fig. 15, the image scanner 1 first carries out a scanning operation in Step 100. Consequently, image elements, i.e. image data taken in are sent in order to the computer 7, which reads (Step 110) the image data and stores the same. The computer 7 is set so as to take in black-and-white image data. Therefore, when the image data are passed through a red filter, lines printed in red-based color merge into a ground color (red) of a surface of the red filter through which the printed lines are passed, and operation data recording lines only that are printed in gray close to black are read (Step 120) as image data by the computer 7.

Thus, the images of the letters, graduation lines, time axes, etc. printed in red-based color on the chart paper 4 are erased by the red filter, and only a central portion of the chart paper 4 and operation data recorded in gray close to black by an analog tachograph are taken in as image data and stored. A black circular portion of a central hole 4a of the chart paper is detected as an aggregation of black dots, and, concerning the black dot portion, the coordinates of the center of the chart paper 4 are computed using the Pythagorean theorem by the same computation process as mentioned above.

Concerning the computation of a 0 time line giving the operational data recording starting position, the chart paper 4 is pasted on a chart paper pasting mounting paper 3 or a chart paper fixing mounting paper 5 with the printed time mark line 3c or 5c and the time axis 4d' portion showing 0 hour on the chart paper 4 lined up with each other. Accordingly, the angular coordinate formed by connecting the 0 hour position and the center indicates a position of $90°$ in terms of trigonometric function, and there is no deviation of angle which causes problems to arise. However, in order to obtain digital date of a higher accuracy, it is recommended that the system be formed so that the correction of the angle can be made finely at intervals of, for example, $0.2°$.

On one-day chart paper 4 on which the time for one day is divided into 24 equal parts, $360÷24=15°$ represents one hour. Since 3-day chart paper 4 and 7-day chart paper 4 on which operational data for 24 hours of a first day and operational data for 2 hours of a second day can be stored are divided into 26 equal parts, $360÷26=13.846°$ represents one hour. Accordingly, the time indicated by each point on the operational data recording lines can be computed on the basis of angles formed by lines connecting the center of the chart paper and each point on the operational data recording lines together and a time axis 4d' of 0 hour. A travel speed and a travel distance can also be computed on the basis of distances between the center of the chart paper and each point on the operational data recording lines.

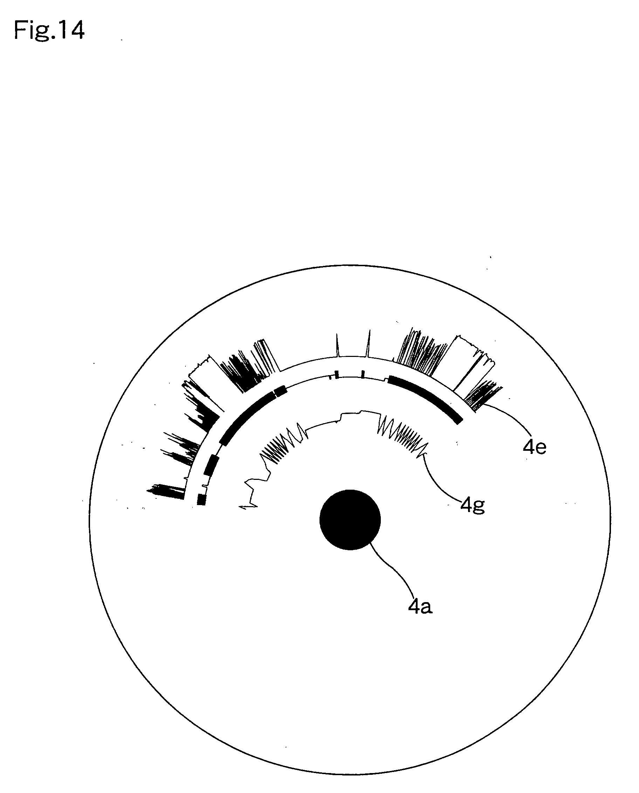

From such a viewpoint, operational data, such as a minimum speed, maximum speed, etc. for every unit time are computed in the following manner on the basis of the image data (Fig. 14) describing the center of the chart paper 4 and travel speed recording lines 4e and travel distance recording lines 4g.

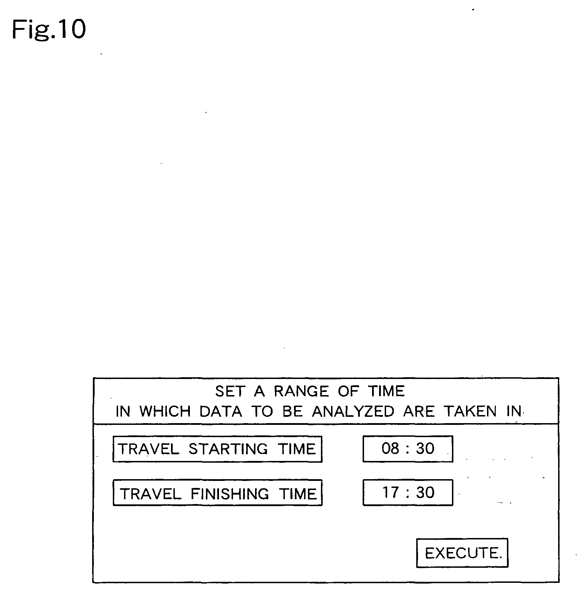

Namely, as shown in the chart paper of Fig. 4, let r1 (number of dots) equal a radius, which extends from the center of the chart paper, of an imaginary circle 9 representing a speed per hour of 0 Km/h, and r2 (number of dots) equal a radius of a circle representing the maximum speed 10. The speed data is taken from the operational data recorded by an analog tachograph recorded on the region between these two circles . First, concerning the operational data to be analyzed, the operator visually determines roughly estimated travel starting and finishing time, and inputs the travel starting and finishing time in terms of hour and minute on a picture display box of the computer 7 as shown in Fig. 10, to thereby designate (Step 130 in Fig. 15) the travel starting position (time) and travel finishing position (time) to be analyzed.

During this time, the computer 7 converts the inputted time into angles, and computes the angles of the travel starting and finishing time with the angular coordinate (in principle $90°$) of 0 hour. Within a range of these two angles, the unit angle (a maximum diameter (diameter of a circle representing maximum speed) of the speed recording range of the chart paper 4, which is divided into 26 equal parts, and which has a maximum speed of 120 km/h, at a reading resolution of 400 DPI is 118 mm) and resolving power is $360° ÷ (\pi \times 118\ mm ÷ 25.4 \times 400)=0.061665°$, which is converted into 16.032887 seconds.

A judgement of color is made at each angle with respect to the dots arranged over the length measured from the center, i.e., over a distance between a position of a radius r1 (number of dots) to a position of a radius r2 (number of dots) as the angle is shifted by one unit of the resolving power (about $0.061665°$) each time. The number of dots removed from the position of the radius r1 of the dot of which a black judgement reference value was detected first (minimum value) is determined to be the value of minimum speed within the mentioned angle. The number of dots counted from a position of the radius r1 of the final dot from which black judgement reference values are detected continuously (maximum value)is determined to be the value of maximum speed within the same angle, and the three items including angle (time), minimum value (minimum speed) and maximum value (maximum speed) are recorded in order as speed data in a work area of the memory with respect to each angle.

The time inputted at this time is determined visually, and not accurate. Therefore, when angles at which not even one black judgement reference value is detected continue from the angle representing the travel starting time, a judgement that the angles represent data recorded before the travel starting time is given, and the angles are not recorded. Similarly, when angles at which not even one reference value is detected continue to an angle representing the travel finishing time, a judgement that the angles represent data recorded after the travel finishing time is made, and the angles are not recorded. Further, when not even one reference value is detected at an intermediate angle which is judged to be after the travel starting time and before the travel finishing time, a judgement that this angle indicates the stoppage of the travel is given, and the number of dot representing the stoppage is substituted for minimum and maximum values and recorded.

The actual travel starting time is obtained by converting the angle of data recorded first as speed data into time. The travel finishing time is obtained by converting the angle of the data recorded last as speed data into time.

The unit angle used in this embodiment will be discussed with chart paper 4 used as an example which is divided into 26 equal parts with a maximum speed set to 120 km/h. Since the diameter of a circle of the maximum speed (120 km/h) line is 118 mm, the circumference comes to represent $118 \times 3.1416(\pi) \times 400 \div 25.4 = 5838$ dots. Since this paper is divided into 26 equal parts, one circumference represents $26 \times 60 \times 60 = 93600$ seconds, and one dot $93600 \div 5838 = 16.032887$ seconds, the angle at this time becoming $360 \div 5838 = 0.061665°$.

The coordinate position of each dot in the range from the radius r1 to the radius r2 with respect to every unit angle at which a color judgement is made is determined. Let $\theta$ equal an angular position with respect to the center of the chart paper, $\underline{r}$ a distance measured from the center, and (0, 0) the coordinates at a left upper portion of an image. The coordinate position is then determined as follows on the basis of a trigonometric function.

$$\text{X-coordinates} = \text{X-coordinates of the center} + \underline{r} \times \cos \theta$$

$$\text{Y-coordinates} = \text{Y-coordinates of the center} - \underline{r} \times \sin \theta$$

This coordinate position is checked as to whether it satisfies a black judgement reference value, and the operational data in polar coordinate form are converted (Step 140 in Fig. 15) into operational data in rectangular coordinate form.

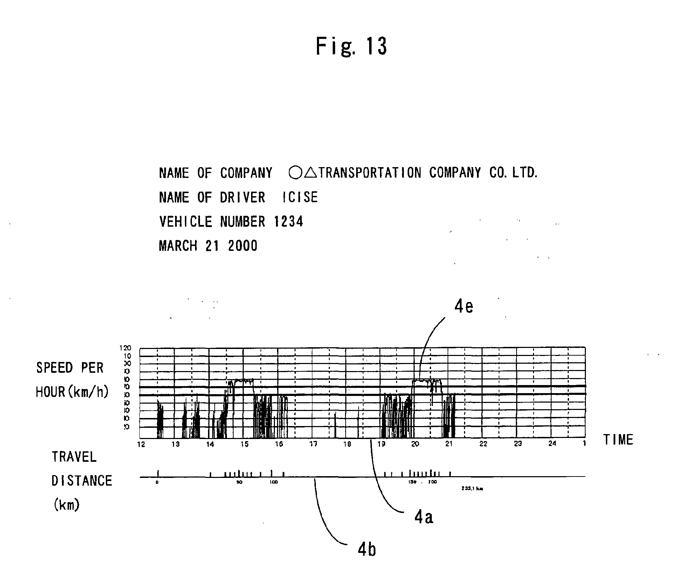

Concerning a value of X, and speed data represented by the numbers of minimum and maximum dots of Y which are thus obtained and recorded in one work area of the memory, the range between angles of travel starting time to travel finishing time are shown on a graph, on which time axes spaced at intervals representing 30 minutes prepared in advance are taken along the X-axis with travel speed graduation lines spaced at intervals representing 10 Km taken along the Y-axis as shown in Fig. 13, by connecting the minimum speed (minimum number of dots of Y) and the maximum speed (maximum number of dots of Y), which correspond to the recorded values of X, with each other by a straight line while advancing one dot at a time the value of X between the travel starting time represented by a left end of the X-axis to the travel finishing time, to thereby draw (Step 150) a traveling graph in rectangular coordinate form.

The speed zones (10 km/h~20 km/h, 20 km/h~30 km/h, etc.) to which a travel speed at each angle between the travel starting time and the travel finishing time belongs is detected. In accordance with the equations: Number of detections x time unit (about 16 seconds) = Travel time (seconds) in that speed zone, and 1 ÷ Number of speed zones from minimum to maximum speeds = ratio,
The above travel time in all the speed zones from that of the minimum speed to that of the maximum speed is computed when the vehicle travels over plural speed zones, to determine a ratio (%) of traveling time (second) in each speed zone to total traveling time.

The maximum speeds detected for all angles are compared each time, and a maximum speed (maximum value) in a total travel time and the actual time (angle) are updated and recorded (Step 160 in Fig. 15). A cumulative travel distance, which is counted from the travel starting time, is further computed as follows.

The travel distance data are recorded by an analog tachograph on the region of the chart paper 4 between two circles 11, 12. Concerning the dots in the regions up to a radius r3 of the inner circle 11 and that r4 beyond the outer circle 12, a color judgement is made for each dot with respect to each angle which is within the above-mentioned travel speed detecting time. At each angle at which a black judgement reference value is detected, minimum and maximum numbers of dots as distance data at the mentioned angle and two items of minimum and maximum values are recorded as distance data in the work area of a memory in order by the following method.

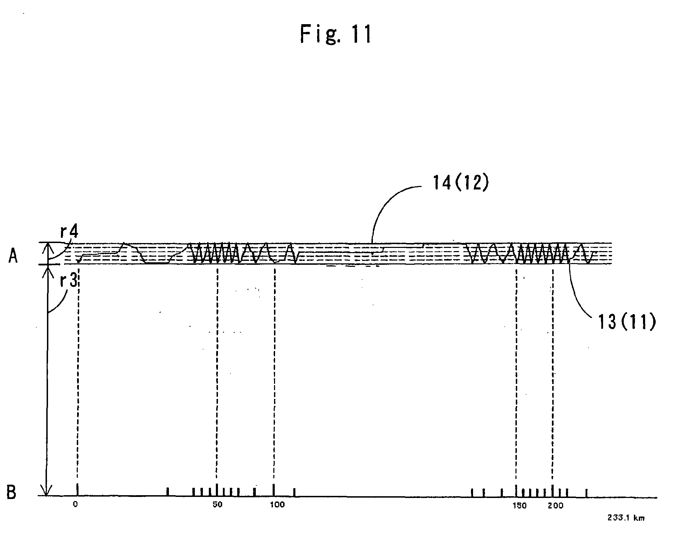

The travel distance data are recorded in a region between a minimum number r3 of dots counted from the center, the radius of the inner circle 11 beyond which distance data are recorded, and a maximum number of dots r4=504 which constitutes the radius of the outer circle 12. The travel distance data are recorded as shown in Fig. 11 (A)with the data line reversing direction when it contacts the distance data minimum value line 11 and the distance data maximum value line 12; that is, within the region between r3 and r4 counted from the center, in accordance with the cumulative travel distance. Therefore, the cumulative distance at an actual point in time cannot be computed on the basis of dot number alone.

Therefore first, concerning the distance data stored in the work area, minimum and maximum values r3', r4' of the distance from the center, which represents the travel starting time, on the time axis X have substantially the same value. When the data on distance from the center become smaller and come closer to the minimum dot number $r3$ every time the value of the time axis X increases by 1 dot after the travel is started, the travel distance becomes proportional to the number of dots (r3'-r3). When the data of distance from the center becomes larger and come close to the maximum number of dots r4, every time the value of the time axis X increases by one dot, the travel distance (r4-r4')x5/(r4-r3) proportional to the number of dots (r4-r4') constitutes the travel distance within the time.

Therefore, as shown in Fig. 11B, a single vertical thick line is shown in a position on the travel distance recording line x corresponding to the time at which the data on distance from the center come closest, and a numerical value of travel distance is shown under the single line. The travel distance graph of Fig. 11B shows a case where a minimum value r3' is equal to a minimum number of dots r3 with (r3' -r3)x5/(r4-r3) $\fallingdotseq$ 0, or a case where a maximum value r4' is equal to a maximum number of dots r4 with (r4-r4')x5/(r4-r3)$\fallingdotseq$0.

Next, the value on the time axis X is advanced sequentially, and +5 km is added to the cumulative travel distance every time the data on distance from the center come closest to the minimum number of dots r3 after the same data come close to the same number of dots r3, and every time the data on distance from the center come closest to the maximum number of dots r4 after the same data come close to the same number of dots r4. Single thick lines are shown vertically in positions in each 10 km. interval corresponding to where the distance data come closest. A numerical value of a cumulative travel distance is shown in positions the intervals of which represent 50 km, as shown in Fig. 11B. Finally, the value of (r3'-r3)x5/(r4-r3) or (r4-r4')x5/(r4-r3) at the travel finishing time is added to the cumulative travel distance value to display (Step 170 in Fig. 15) the travel distance for the whole travel.

The operation data including minimum speed, maximum speed, travel distance for every unit time period, stopping time, travel distance for the whole travel, etc. for every unit time period computed as described above are stored (Step 180) in the data base.

Thus, concerning the image data on the chart paper 4 taken into the computer 7 by the image scanner 1, the time axis 4d, travel distance and travel speed graduation lines 4b, letters, etc. printed in red-based color on the chart paper 4 disappear owing to the red filter, and only the travel speed recording lines 4e, travel distance recording lines 4g and central hole 4a are read as shown in Fig. 14. Accordingly, the numerical values shown by the travel speed recording lines 4e and travel distance recording lines 4g can be read accurately on the basis of the round hole 4a and time mark line 3c or 5c in and on the central portion of the chart paper 4, and the operation data including minimum speed, maximum speed, travel distance, etc. for every unit time period can be stored as digital data in the data base.

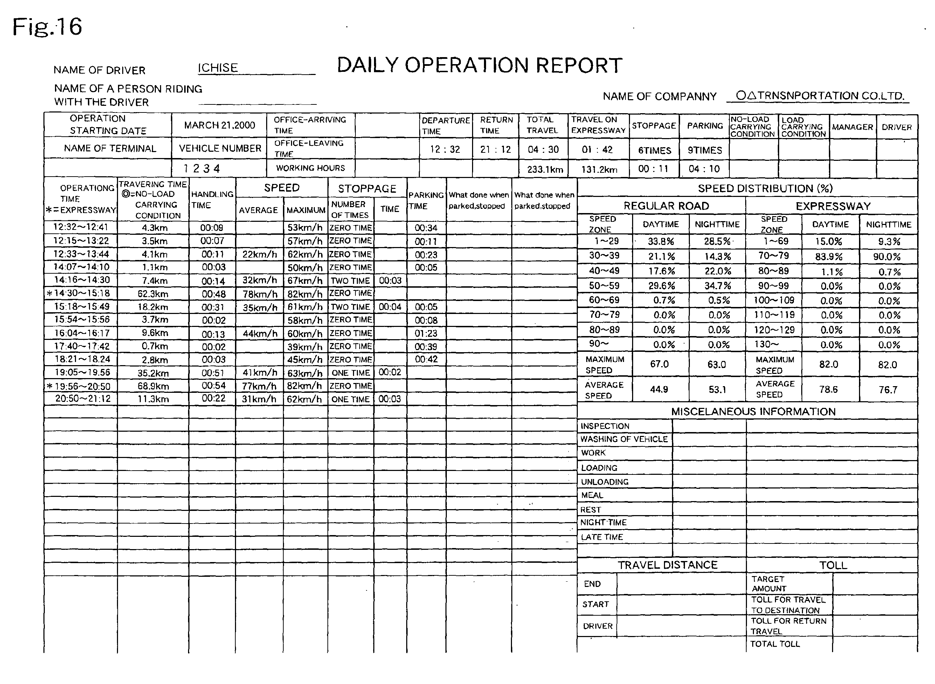

This enables a daily operation report shown in Fig. 16, on which a driver of a vehicle and a date of operation are designated, to be prepared by using a tabulating program contained in the computer 7. In this daily operation report, the travel distance, maximum speed, stoppage time, etc. for every predetermined operation time (or unit time period) are written, and the resultant report can be displayed on a display or printed out to thereby put the same to some use for evaluating, training and guiding the driver.

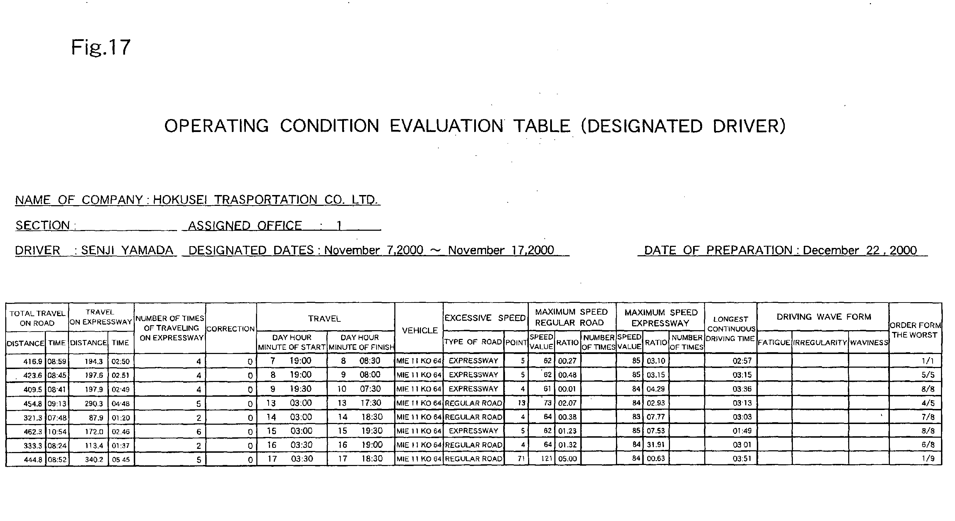

When the reading of operational data from the above-mentioned chart paper into a data base is done every day the vehicle is operated, operational data on all dates of operation of all drivers are utilizably stored in the data base. Therefore, as shown in Fig. 17, it is possible to designate a driver and plural dates of operation (for example, November 7th ~ November 17th), prepare an operating condition evaluation table of the driver for this period of time, show the table on a display, and print out the table. On this operating condition evaluation table, travel time for each travel distance, maximum speed and the time of this speed, stopping time, travel time, the ratio thereof and a total travel distance, etc. corresponding thereto can be printed as necessary. The displaying and printing of comparative daily reports on the operating condition of drivers in respective groups and comparative daily reports on the operating condition of respective drivers also become possible, and such reports can be effective in safety and labor management.

On the chart paper, engine rotational frequency measuring lines are recorded in some cases along a time axis in addition to the above-mentioned travel speed recording lines and travel distance recording lines. In this case, rotational frequency data are read from the rotational frequency recording lines in the same manner as the travel speed recording lines and travel distance recording lines, and stored in the data base. Thus, a minimum rotational frequency, a maximum rotational frequency for each unit time period can also be displayed on the daily operation report and operating condition evaluation table.

The operating condition analyzing system according to the present invention is capable as described above of reading by an image scanner the operational data recorded on chart paper by an analog tachograph used widely at present for recording operational data on a vehicle, displaying travel speed recording lines and travel distance recording lines on a graph in rectangular coordinate form on a display of a computer so that the recording lines can be seen easily on the graph, observing the operating condition accurately, and putting these data to some use for the safety and labor management.

Even when chart paper is placed in a slightly shifted state in a setting position on an image scanner, highly accurate recording lines in rectangular coordinate form can be obtained by computing the position of the center of the chart paper accurately on the basis of image data on the chart paper.

On the chart paper, a travel starting position (time) and a travel finishing position (time) as positions for defining a range into which operational data are taken can be freely designated. On a line-converted travel graph in rectangular coordinate form, the operational data recording lines can be displayed so that the starting position is at a left end. Therefore, an operational graph in rectangular coordinate form on which operational data starting positions are arranged at the left end so that the data can be seen easily can be obtained.

Further, an image on chart paper on which time axes,. travel distance lines and travel speed graduation lines, letters and the like are printed in red-based color is read by using a red filter and setting a reading mode of a computer to a black-and-white mode. Consequently, the time axes, travel distance lines and travel speed graduation lines, letters and the like printed in red-based color are erased, and only the operational data recording lines on and position of center computing central hole in the chart paper can be read. This enables values of minimum and maximum speeds and points in time at which they are recorded during each unit time period, stopping time, traveling time and its ratio in each travel speed zone, total travel distance, etc. to be tabulated easily, after which a graph of the operational data recorded on the chart paper can be made to be shown on a display or printed, a daily operation report including such a table and an operating condition evaluation table can be prepared, and this evaluation table, etc. can be put to use for commending good drivers, guiding and instructing bad drivers, and managing labor and safety.

**Claims**

1. A system for analyzing operating condition of a vehicle, adapted to read from disc type chart paper the operational data including at least a travel speed and a travel distance recorded on the chart paper by an analog tachograph, **characterized in that**:

   the system is provided with a device for reading an image of at least operational data recording lines recorded in polar coordinate form on the chart paper, a device for converting at least the operational data recording lines in polar coordinate form read by the image reading device into those in rectangular coordinate form, and an operational data output device for outputting data taken from at least the operational data recording lines and converted by the conversion device into rectangular coordinate form, so as to display or print the same data.

2. A system for analyzing operating condition of a vehicle according to Claim 1, wherein the image reading device is adapted to read time axes, travel speed graduation lines and travel distance graduation lines, which are printed in advance on the chart paper, with the operational data recording lines, the conversion device being adapted to convert the time axes, travel speed graduation lines and travel distance graduation lines with the operational data recording lines into those in rectangular coordinate form, the operational data output device being adapted to output the data on the time axes, travel speed graduation lines and travel distance graduation lines with those on the operational data recording lines so as to display or print the same data.

3. A system for analyzing operating condition of a vehicle according to Claim 1, wherein the conversion device is adapted to compute a position of the center of the chart paper on the basis of a central hole thereof, read image element data on lines which extend radially from the center at each unit angle based on the position of the center, with the radial distance of data measured, and re-arrange the image data in a corresponding position on an X•Y plane while shifting the unit angle in the direction of X-axis and thereby convert the polar coordinate form into the rectangular coordinate form.

4. A system for analyzing operating condition of a vehicle according to Claim 3, wherein mounting paper for supporting the chart paper are provided, each of the mounting papers being printed with a chart paper setting circle, which shows a position in which the chart paper is to be set and a black portion positioned in a central part of the circle and slightly larger than the central hole of the chart paper, the chart paper being supported in the chart paper setting circle on the mounting paper, the chart paper being placed in a predetermined position on a reading table of the image reading device via the mounting paper to thereby read the image.

5. A system for analyzing operating condition of a vehicle according to Claim 4, wherein the mount is printed thereon with an time mark line which extends from the center of the chart paper setting circle toward an edge of the mount, and which is slightly longer than the radius of the chart paper setting circle, the chart paper being set on the mounting paper by aligning the specific time axis which is printed on the chart paper, with the time mark line.

6. A system for analyzing operating condition of a vehicle according to Claim 2, wherein the chart paper is printed with the time axes, travel speed graduation lines and travel distance graduation lines in red-based color, the operational data recording lines being recorded in gray close to black on the chart paper, the image on the chart paper being read by the image reading device through a red filter, whereby the operational data recording lines are read by the image reading device with the time axes, travel speed graduation lines and travel distance graduation lines erased.

7. A system for analyzing operating condition of a vehicle according to Claim 6, wherein the system is further provided with a computation storage device adapted to compute at least a minimum speed, a maximum speed and a travel distance for at least each unit time period on the basis of the operational data recording lines including travel speeds and travel distances, and store the computed data in a data base, and a table producing device adapted to make a table of numerical values of a minimum speed, a maximum speed and a travel distance for at least each unit time on the basis of the data stored in the data base, and output the table of numerical values.

Fig. 1

# Fig. 2

Fig. 3

# Fig. 4

# Fig. 5

# Fig. 6

## Fig. 7

## Fig. 8

Fig. 9

2

1

3 ( 6 )

8

Fig.10

```
┌─────────────────────────────────────────────────────┐
│              SET  A  RANGE  OF  TIME                  │
│    IN  WHICH  DATA  TO  BE  ANALYZED  ARE  TAKEN  IN  │
│  ┌───────────────────────────┐      ┌──────────┐     │
│  │ TRAVEL  STARTING  TIME │         │ 08 : 30  │     │
│  └───────────────────────────┘      └──────────┘     │
│  ┌───────────────────────────┐      ┌──────────┐     │
│  │ TRAVEL  FINISHING  TIME │        │ 17 : 30  │     │
│  └───────────────────────────┘      └──────────┘     │
│                                      ┌──────────┐     │
│                                      │ EXECUTE. │     │
│                                      └──────────┘     │
└─────────────────────────────────────────────────────┘
```

Fig. 11

Fig.12

IMAGE PROCESSING

| READ DATA BY A SCANNER. |
| DISPLAY AN IMAGE. |
| DISPLAY AN IMAGE ON AN ENLARGED SCALE. |
| DISPLAY TRAVEL GRAPH. |
| DISPLAY DAILY OPERATION REPORT. |
| DISPLAY TOTAL TABULATION. |

| PRINT IMAGE. |
| PRINT IMAGE ON AN ENLARGED SCALE. |
| PRINT TRAVEL GRAPH. |
| PRINT DAILY OPERATION REPORT. |
| PRINT TOTAL TABULATION. |
| END. |

# Fig. 13

NAME OF COMPANY ○△TRANSPORTATION COMPANY CO. LTD.
NAME OF DRIVER ICISE
VEHICLE NUMBER 1234
MARCH 21 2000

Fig.14

4e

4g

4a

Fig.15

```
                        ┌─────────────┐
                        │    START    │ ────── 100
                        └─────────────┘
                               │
              ┌────────────────────────────────┐
              │  CARRY OUT A SCANNING OPERATION │ ── 110
              └────────────────────────────────┘
                               │
                    ┌───────────────────┐
                    │  READ IMAGE DATA   │ ──── 120
                    └───────────────────┘
                               │
                 ┌────────────────────────┐
                 │  DISPLAY THE READ IMAGE │ ── 130
                 └────────────────────────┘
                               │
        ┌──────────────────────────────────────────┐
        │ DESIGNATE STARTING AND FINISHING POSITIONS │ ── 140
        └──────────────────────────────────────────┘
                               │
           ┌─────────────────────────────────┐
           │      CONVERT POLAR COORDINATES    │ ── 150
           │   INTO RECTANGULAR COORDINATES    │
           └─────────────────────────────────┘
                               │
           ┌─────────────────────────────────┐
           │     DISPLAY DATE RECORDING LINES  │ ── 160
           │     IN RECTANGULAR COORDINATES    │
           └─────────────────────────────────┘
                               │
       ┌───────────────────────────────────────────┐
       │ COMPUTER A MINIMUM SPEED AND A MAXIMUM SPEED │ ── 170
       │         FOR EACH UNIT TIME PERIOD            │
       └───────────────────────────────────────────┘
                               │
    ┌──────────────────────────────────────────────────────┐
    │ COMPUTER A TRAVEL DISTANCE AND A CUMULATIVE VALUE THEREOF │ ── 180
    │              FOR EACH UNIT TIME PERIOD                    │
    └──────────────────────────────────────────────────────┘
                               │
    ┌──────────────────────────────────────────────────────┐
    │ STORE OPERATING TIME,TRAVEL DISTANCE AND MAXIMUN SPEED │
    │                  IN A DATA BASE.                        │
    └──────────────────────────────────────────────────────┘
                               │
                        ┌─────────────┐
                        │     END     │
                        └─────────────┘
```

# Fig.16

## DAILY OPERATION REPORT

NAME OF DRIVER    ICHISE

NAME OF A PERSON RIDING
WITH THE DRIVER

NAME OF COMPANNY   O△TRNSNPORTATION CO.LTD.

| OPERATION STARTING DATE | MARCH 21,2000 | OFFICE–ARRIVING TIME | | DEPARTURE TIME | RETURN TIME | TOTAL TRAVEL | TRAVEL ON EXPRESSWAY | STOPPAGE | PARKING | NO-LOAD CARRYING CONDITION | LOAD CARRYING CONDITION | MANAGER | DRIVER |
|---|---|---|---|---|---|---|---|---|---|---|---|---|---|
| NAME OF TERMINAL | VEHICLE NUMBER | OFFICE–LEAVING TIME | | 12 : 32 | 21 : 12 | 04 : 30 | 01 : 42 | 6TIMES | 9TIMES | | | | |
| | 1 2 3 4 | WORKING HOURS | | | | 233.1km | 131.2km | 00 : 11 | 04 : 10 | | | | |

| OPERATIONG TIME *=EXPRESSWAY | TRAVERING TIME ◎=NO-LOAD CARRYING CONDITION | HANDLING TIME | SPEED | | STOPPAGE | | PARKING TIME | What done when parked,stopped | What done when parked,stopped |
|---|---|---|---|---|---|---|---|---|---|
| | | | AVERAGE | MAXIMUM | NUMBER OF TIMES | TIME | | | |
| 12:32~12:41 | 4.3km | 00:09 | | 53km/h | ZERO TIME | | 00:34 | | |
| 12:15~13:22 | 3.5km | 00:07 | | 57km/h | ZERO TIME | | 00:11 | | |
| 12:33~13:44 | 4.1km | 00:11 | 22km/h | 62km/h | ZERO TIME | | 00:23 | | |
| 14:07~14:10 | 1.1km | 00:03 | | 50km/h | ZERO TIME | | 00:05 | | |
| 14:16~14:30 | 7.4km | 00:14 | 32km/h | 67km/h | TWO TIME | 00:03 | | | |
| *14:30~15:18 | 62.3km | 00:48 | 78km/h | 82km/h | ZERO TIME | | | | |
| 15:18~15:49 | 18.2km | 00:31 | 35km/h | 61km/h | TWO TIME | 00:04 | 00:05 | | |
| 15:54~15:56 | 3.7km | 00:02 | | 58km/h | ZERO TIME | | 00:08 | | |
| 16:04~16:17 | 9.6km | 00:13 | 44km/h | 60km/h | ZERO TIME | | 01:23 | | |
| 17:40~17:42 | 0.7km | 00:02 | | 39km/h | ZERO TIME | | 00:39 | | |
| 18:21~18:24 | 2.8km | 00:03 | | 45km/h | ZERO TIME | | 00:42 | | |
| 19:05~19:56 | 35.2km | 00:51 | 41km/h | 63km/h | ONE TIME | 00:02 | | | |
| *19:56~20:50 | 68.9km | 00:54 | 77km/h | 82km/h | ZERO TIME | | | | |
| 20:50~21:12 | 11.3km | 00:22 | 31km/h | 62km/h | ONE TIME | 00:03 | | | |

### SPEED DISTRIBUTION (%)

| REGULAR ROAD | | | EXPRESSWAY | | |
|---|---|---|---|---|---|
| SPEED ZONE | DAYTIME | NIGHTTIME | SPEED ZONE | DAYTIME | NIGHTTIME |
| 1~29 | 33.8% | 28.5% | 1~69 | 15.0% | 9.3% |
| 30~39 | 21.1% | 14.3% | 70~79 | 83.9% | 90.0% |
| 40~49 | 17.6% | 22.0% | 80~89 | 1.1% | 0.7% |
| 50~59 | 29.6% | 34.7% | 90~99 | 0.0% | 0.0% |
| 60~69 | 0.7% | 0.5% | 100~109 | 0.0% | 0.0% |
| 70~79 | 0.0% | 0.0% | 110~119 | 0.0% | 0.0% |
| 80~89 | 0.0% | 0.0% | 120~129 | 0.0% | 0.0% |
| 90~ | 0.0% | 0.0% | 130~ | 0.0% | 0.0% |
| MAXIMUM SPEED | 67.0 | 63.0 | MAXIMUM SPEED | 82.0 | 82.0 |
| AVERAGE SPEED | 44.9 | 53.1 | AVERAGE SPEED | 78.6 | 76.7 |

### MISCELANEOUS INFORMATION

| | |
|---|---|
| INSPECTION | |
| WASHING OF VEHICLE | |
| WORK | |
| LOADING | |
| UNLOADING | |
| MEAL | |
| REST | |
| NIGHT TIME | |
| LATE TIME | |

| TRAVEL DISTANCE | | TOLL | |
|---|---|---|---|
| END | | TARGET AMOUNT | |
| START | | TOLL FOR TRAVEL TO DESTINATION | |
| DRIVER | | TOLL FOR RETURN TRAVEL | |
| | | TOTAL TOLL | |

EP 1 146 486 A2

## Fig.17

## OPERATING CONDITION EVALUATION TABLE (DESIGNATED DRIVER)

NAME OF COMPANY : HOKUSEI TRASPORTATION CO. LTD.

SECTION :　　　　　　　ASSIGNED OFFICE　:　1

DRIVER　: SENJI YAMADA　DESIGNATED DATES : November 7,2000 ~ November 17,2000　　　　　DATE OF PREPARATION : December 22 , 2000

| TOTAL TRAVEL ON ROAD | | TRAVEL ON EXPRESSWAY | | NUMBER OF TIMES OF TRAVELING ON EXPRESSWAY | CORRECTION | TRAVEL | | | VEHICLE | EXCESSIVE SPEED | | MAXIMUM SPEED REGULAR ROAD | | | MAXIMUM SPEED EXPRESSWAY | | | LONGEST CONTINUOUS DRIVING TIME | DRIVING WAVE FORM | | | ORDER FORM THE WORST |
|---|---|---|---|---|---|---|---|---|---|---|---|---|---|---|---|---|---|---|---|---|---|---|
| DISTANCE | TIME | DISTANCE | TIME | | | DAY HOUR MINUTE OF START | DAY HOUR MINUTE OF FINISH | | | TYPE OF ROAD | POINT | SPEED VALUE | RATIO | NUMBER OF TIMES | SPEED VALUE | RATIO | NUMBER OF TIMES | | FATIGUE | IRREGULARITY | WAVINESS | |
| 416.9 | 08:59 | 194.3 | 02:50 | 4 | 0 | 7　19:00 | 8　08:30 | MIE 11 KO 64 | EXPRESSWAY | 5 | 62 | 00.27 | | 85 | 03.10 | | 02:57 | | | | 1/1 |
| 423.6 | 08:45 | 197.6 | 02.51 | 4 | 0 | 8　19:00 | 9　08:00 | MIE 11 KO 64 | EXPRESSWAY | 5 | 62 | 00.48 | | 85 | 03.15 | | 03:15 | | | | 5/5 |
| 409.5 | 08 41 | 197.9 | 02 49 | 4 | 0 | 9　19:30 | 10　07:30 | MIE 11 KO 64 | EXPRESSWAY | 4 | 61 | 00.01 | | 84 | 04.29 | | 03:36 | | | | 8/8 |
| 454.8 | 09 13 | 290.3 | 04 48 | 5 | 0 | 13　03:00 | 13　17:30 | MIE 11 KO 64 | REGULAR ROAD | 13 | 73 | 02.07 | | 84 | 02.93 | | 03 13 | | | | 4/5 |
| 321.3 | 07:48 | 87.9 | 01:20 | 2 | 0 | 14　03:00 | 14　18:30 | MIE 11 KO 64 | REGULAR ROAD | 4 | 64 | 00.38 | | 83 | 07.77 | | 03:03 | | | | 7/8 |
| 462.3 | 10:54 | 172.0 | 02.46 | 6 | 0 | 15　03:00 | 15　19:30 | MIE 11 KO 64 | EXPRESSWAY | 5 | 62 | 01.23 | | 85 | 07.53 | | 01:49 | | | | 8/8 |
| 333.3 | 08:24 | 113.4 | 01:37 | 2 | 0 | 16　03:30 | 16　19:00 | MIE 11 KO 64 | REGULAR ROAD | 4 | 64 | 01.32 | | 84 | 31.91 | | 03 01 | | | | 6/8 |
| 444.8 | 08:52 | 340.2 | 05 45 | 5 | 0 | 17　03:30 | 17　18:30 | MIE 11 KO 64 | REGULAR ROAD | 71 | 121 | 05.00 | | 84 | 00.63 | | 03:51 | | | | 1/9 |

EP 1 146 486 A2